# NEUE EUROPÄISCHE PATENTSCHRIFT

(11) **EP 1 906 702 B2**
(45) Veröffentlichungstag und Bekanntmachung des Hinweises auf die Entscheidung über den Einspruch: **05.11.2014**
(45) Hinweis auf die Patenterteilung: 26.10.2011
(21) Anmeldenummer: 07117410.6
(22) Anmeldetag: 27.09.2007
(51) Int. Cl.: H04R 25/00, H04R 3/00, H04R 1/10, H04R 5/04

(54) **Verfahren zur Bedienkontrolle einer Hörvorrichtung und entsprechende Hörvorrichtung**
Method for operating control of a hearing device and corresponding hearing device
Procédé destiné au contrôle de commande d'un dispositif auditif et dispositif auditif correspondant

(30) Priorität: 29.09.2006 DE 102006046315
(43) Veröffentlichungstag der Anmeldung: 02.04.2008
(73) Patentinhaber: Siemens Audiologische Technik GmbH, 91058 Erlangen (DE)
(72) Erfinder: Barthel, Roland, 91058 Erlangen (DE); Beck, Frank, 91080 Spardorf (DE); Bäuml, Robert, 90542 Eckental (DE); Fischer, Eghart, 91126 Schwabach (DE)
(74) Vertreter: Maier, Daniel Oliver

(56) Entgegenhaltungen:
- EP-A2- 1 414 271
- WO-A1-03/032681
- WO-A2-2004/056154
- DE-A1- 10 053 179
- US-A1- 2006 179 018

## Beschreibung

Die vorliegende Erfindung betrifft ein Verfahren zum Überprüfen einer Einstellung einer tragbaren Hörvorrichtung mit mindestens einem Einstellwert. Darüber hinaus betrifft die vorliegende Erfindung eine entsprechende Hörvorrichtung, die am oder im Ohr tragbar ist. Unter dem Begriff Hörvorrichtung wird hier jede im oder am Ohr tragbare Kommunikationseinrichtung, insbesondere ein Hörgerät, ein Headset oder Kopfhörer verstanden.

Hörgeräte sind tragbare Hörvorrichtungen, die zur Versorgung von Schwerhörenden dienen. Um den zahlreichen individuellen Bedürfnissen entgegenzukommen, werden unterschiedliche Bauformen von Hörgeräten wie Hinter-dem-Ohr-Hörgeräte (HdO), Indem-Ohr-Hörgeräte (IdO) und Concha-Hörgeräte bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

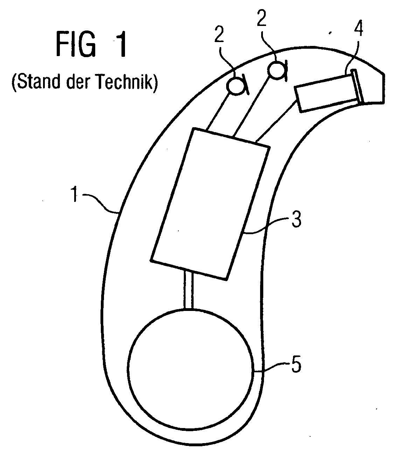

Hörgeräte besitzen prinzipiell als wesentliche Komponenten einen Eingangswandler, einen Verstärker und einen Ausgangswandler. Der Eingangswandler ist in der Regel ein Schallempfänger, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinheit integriert. Dieser prinzipielle Aufbau ist in FIG 1 am Beispiel eines Hinter-dem-Ohr-Hörgeräts dargestellt. In ein Hörgerätegehäuse 1 zum Tragen hinter dem Ohr sind ein oder mehrere Mikrofone 2 zur Aufnahme des Schalls aus der Umgebung eingebaut. Eine Signalverarbeitungseinheit 3, die ebenfalls in das Hörgerätegehäuse 1 integriert ist, verarbeitet die Mikrofonsignale und verstärkt sie. Das Ausgangssignal der Signalverarbeitungseinheit 3 wird an einen Lautsprecher bzw. Hörer 4 übertragen, der ein akustisches Signal ausgibt. Der Schall wird gegebenenfalls über einen Schallschlauch, der mit einer Otoplastik im Gehörgang fixiert ist, zum Trommelfell des Geräteträgers übertragen. Die Stromversorgung des Hörgeräts und insbesondere die der Signalverarbeitungseinheit 3 erfolgt durch eine ebenfalls ins Hörgerätegehäuse 1 integrierte Batterie 5.

Moderne digitale Hörgeräte haben vielfältige Konfigurationsmöglichkeiten, um individuell auf den Hörgeräteträger eingestellt werden zu können. Trotzdem kann nicht vorhergesehen werden, wie der Hörgeschädigte mit den Einstellungen des Geräts zurechtkommt. Die Umgebung, in der sich der Hörgeräteträger bewegt, ist vielfältig, und so kann es bei gewissen Klangkulissen zu unvorhersehbaren Problemen kommen, in denen beispielsweise der Höreindruck unangenehm ist oder Sprachverständlichkeitsprobleme bestehen. Teilweise ist die Wahrnehmung des vom Hörgerät erzeugten Schalls seitens des Benutzers auch von dessen Gemütszuständen abhängig. Solche Faktoren können technisch nicht berücksichtigt werden und führen zu einer schlecht objektiv erklärbaren Unzufriedenheit des Nutzers mit seinem Gerät.

Im Rahmen des so genannten Datalogging wird bei modernen Hörgeräten Information über die Umgebung des Nutzers aufgezeichnet, um die Anpassung an die typische Umgebung zu unterstützen. Ein derartiges Datenaufzeichnungsverfahren zeigt beispielsweise die Druckschrift EP 1 367 857 A1. Nach dortigen Angaben werden Hörgerätevariablen aufgezeichnet, die beispielsweise logische Zustände von nutzerbetätigbaren Stellern oder Parameterwerte digitaler Signalprozessoren beinhalten. Durch ein Aufzeichnen sowohl der Hörgerätevariablen als auch der Eingangssignaldaten ist es möglich, Korrelationen zwischen vorbestimmten Signalereignissen in den Eingangssignaldaten und Hörgerätebedienungen zu erkennen.

Darüber hinaus beschreibt die Patentschrift DE 102004025691 B3 ein Hörhilfegerät mit einer Bedieneinrichtung. Die akustische Hörumgebung, in der sich das Hörhilfegerät befindet, wird analysiert, und in Abhängigkeit von der dadurch erkannten Hörsituation wird dem Bedienelement eine von der jeweiligen Hörsituation abhängige Einstellfunktion zugeordnet. Die Einstellmöglichkeit des Hörhilfegeräts wird dadurch auf die für die jeweilige Hörsituation sinnvollen Einstellmöglichkeiten begrenzt.

Aus der Druckschrift WO 03/032681 A1 ist ein Verfahren zum Programmieren eines Kommunikationsgeräts, insbesondere eines Hörgeräts bekannt. Das Hörgerät kann erkennen, ob ein Signal die Stimmte eines Nutzers enthält. Dazu werden beschreibende Parameter des Signals aufgenommen, wenn der Nutzer spricht, und andere beschreibende Parameter, wenn der Nutzer nicht spricht. Anhand der beschreibenden Parameter kann somit entschieden werden, ob die Stimme des Nutzers im Eingangssignal enthalten ist oder nicht.

Das Dokument WO 2004/056154 A2 beschreibt ein Verfahren zum Wählen eines Programms in einem Multi-Programm-Körgerät. Das Hörgerät kann einen vom Nutzer eingegebenen Parametersatz mit einem gespeicherten Parametersatz vergleichen. Außerdem ist es dazu ausgelegt, die Differenz zwischen den beiden Parametersätzen zu reduzieren, um eine vom Nutzer bevorzugte Einstellung zu speichern.

Die Aufgabe der vorliegenden Erfindung besteht darin, einen Nutzer bei der Einstellung einer tragbaren Hörvorrichtung und insbesondere eines Hörgeräts zu unterstützen, so dass die Akzeptanz des Geräts steigt.

Erfindungsgemäß wird diese Aufgabe gemäß Patentanspruch 1 gelöst.

Darüber hinaus wird erfindungsgemäß bereitgestellt eine Hörvorrichtung nach Anspruch 7.

In vorteilhafter Weise können durch die Aufzeichnung der Reaktion des Nutzers auf die Umgebung gezielt Einstellungen am Gerät vorgenommen werden, die den Nachsorgeaufwand erheblich reduzieren. Auf diese Weise steigt die Akzeptanz des Geräts und nichttechnische Ursachen für das Nutzerverhalten, z.B. Gemütszustände, können berücksichtigt bzw. identifiziert werden.

Der oben genannte Einstellwert kann beispielsweise ein Parameter einer Signalverarbeitungseinrichtung der Hörvorrichtung sein. Derartige Einstellwerte können leicht bereitgestellt oder abgespeichert werden, da sie explizit vorliegen. Es können aber auch Einstellwerte, z.B. der Einstellwinkel eines Stellrads, der mit einem eigenen Sensor abgegriffen wird, abgespeichert und für die Überprüfung herangezogen werden.

Vorzugsweise beinhalten die Schalldaten Klassifikationsinformation der Hörvorrichtung über den Schall aus der Umgebung, und diese Klassifikationsinformation wird für das Auswerten bzw. die Einstellungsüberprüfung herangezogen. Durch diese Klassifikationsinformation lässt sich die Einstellung leichter überprüfen.

Der mindestens eine Einstellwert kann eine Lautstärke oder eine Programmidentifikation betreffen. So lassen sich beispielsweise die gängigsten Einstellungen eines Hörgeräts, nämlich die Lautstärke und die Programmwahl, für die Überprüfung in Abhängigkeit von der jeweiligen Schallsituation aufzeichnen.

Darüber hinaus ist das Überprüfen der Einstellung der Hörvorrichtung Teil eines automatischen Lernvorgangs der Hörvorrichtung, wobei ein Resultat des Schritts des Auswertens für ein Abbruchkriterium des automatischen Lernens herangezogen wird. Hierdurch ist es möglich, das Lernen abzubrechen, wenn beispielsweise das Einstellen über einen längeren Zeitraum als nicht sinnvoll bewertet wird.

Ein Resultat des Schritts des Auswertens kann ferner von der Hörvorrichtung optisch oder akustisch dem Nutzer gemeldet werden. Dies hat den Vorteil, dass der Nutzer unmittelbar eine Rückkopplung von der automatischen Überprüfung der Einstellungen erhält.

Bei dem Auswerten kann ein Vergleich eines aktuellen Einstellwerts und der aktuellen Schalldaten mit früheren oder vorgegebenen Einstellwerten und entsprechenden Schalldaten erfolgen. Damit kann das Einstellen entweder relativ anhand einer Historie überprüft oder absolut anhand vorgegebener Daten beurteilt werden.

Ein besonderer Vorteil der Überprüfung der Einstellung durch die tragbare Hörvorrichtung bzw. das Hörgerät selbst besteht darin, dass so rasch wie möglich festgestellt werden kann, ob die Einstellungen im täglichen Gebrauch der Hörvorrichtung sinnvoll sind. Auf diese Weise können Unzufriedenheiten des Nutzers mit seinem Gerät vielfach vermieden werden.

Die vorliegende Erfindung ist anhand der beigefügten Zeichnungen näher erläutert, in denen zeigen:
- FIG 1: den prinzipiellen Aufbau eines Hörgeräts;
- FIG 2: mehrere Einstellkurven über der Zeit; und
- FIG 3: ein Blockschaltbild einer erfindungsgemäßen Hörvorrichtung.

Die nachfolgend näher geschilderten Ausführungsbeispiele stellen bevorzugte Ausführungsformen der vorliegenden Erfindung dar.

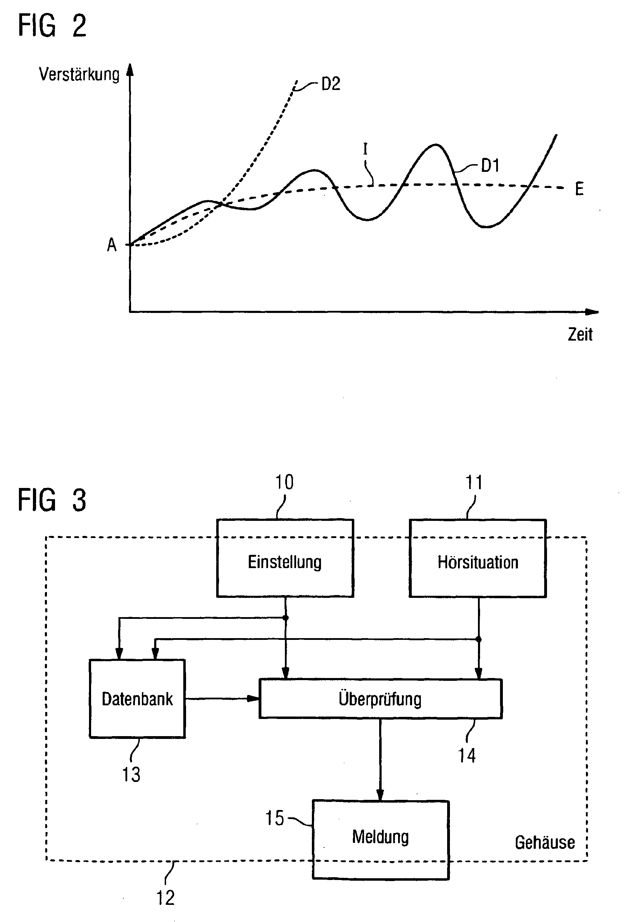

Grundbestandteil des erfindungsgemäßen Verfahrens ist, das Nutzerverhalten in Abhängigkeit von seiner Umgebung aufzuzeichnen. In FIG 2 sind verschiedene Möglichkeiten des Nutzerverhaltens symbolisch angedeutet. Als Beispiel ist hier gewählt, wie der Nutzer die Verstärkung des Hörgeräts über der Zeit einstellt. Hier sei vorausgesetzt, dass eine Klassifikation der Hörsituation stattgefunden hat und diese Hörsituation sich im betrachteten Zeitraum nicht ändert. Konkret bezieht sich das Beispiel von FIG 2 auf die Verstärkung, die sich der Nutzer in einer bestimmten Hörsituation einstellt. Im Idealfall I (gestrichelte Linie) stellt der Nutzer die Verstärkung ausgehend von einem Ausgangswert A im Laufe der Zeit auf einen Endwert E ein, der konstant bleibt. Dieser Idealfall gilt als Grundlage für die Überprüfung, ob der Nutzer eine sinnvolle Einstellung an seinem Gerät vornimmt.

In einem anderen Fall stellt der Nutzer die Verstärkung entsprechend der durchgezogenen Linie D1 ein. Diese Kurve D1 ist divergent und konvergiert nicht zu dem idealen Endwert E. Vielmehr alterniert sie und zeigt die immer größer werdende Unsicherheit des Nutzers. Ein derartiges Nutzerverhalten beim Einstellen der Hörvorrichtung wird über kurz oder lang zu einer Frustration des Nutzers führen.

Ein weiteres Beispiel des Einstellverhaltens zeigt die Kurve D2, die ausgehend von dem Ausgangswert A ebenfalls nicht zu dem Endwert E konvergiert, sondern wie die Kurve D1 divergiert. Grund für diese Divergenz und das immer höhere Einstellen der Verstärkung kann sein, dass der Hörverlust des Nutzers zunimmt und das Gerät für den Hörverlust nicht mehr adäquat ist oder beispielsweise die Leistung der Batterie nachgelassen hat. Eine Überprüfung z.B. anhand eines Vergleichs mit der Idealkurve I oder anhand einer Historie (beispielsweise Abstand zu früheren Einstellwerten) kann auch hier dazu genutzt werden, um zu erkennen, dass die Einstellung gemäß der Kurve D2 nicht sinnvoll ist.

In FIG 3 ist ein Blockschaltbild eines Hörgeräts dargestellt, das eine erfindungsgemäße Überprüfung der Einstellwerte automatisch durchführen kann. Die Überprüfung der Einstellung 10 der Signalverarbeitung des Hörgeräts in Abhängigkeit von der jeweiligen Hörsituation 11 erfolgt automatisch im Hörgerät d.h. in seinem Gehäuse 12. Die Einstellung 10 nimmt der Hörgerätenutzer beispielsweise manuell vor und die Hörsituation 11 wird im Hörgerät über ein oder mehrere Mikrofone und beispielsweise einem geeigneten Klassifikator festgestellt. Typische Einstelldaten, die hier überprüft werden können, sind beispielsweise die Lautstärkeeinstellung, die Programmeinstellung etc. Diese Daten werden in einer hörgeräteinternen Datenbank 13 aufgezeichnet. Damit kann der Akustiker gegebenenfalls zu einem späteren Zeitpunkt nachvollziehen, wie der Nutzer auf die Umgebung reagiert hat. Es lässt sich feststellen, ob ein technisches Problem bzw. eine Fehlkonfiguration des Hörgeräts vorliegt, oder ob der Nutzer mehr oder weniger stimmungsabhängig auf die Umgebung reagiert hat und durch eine Modifikation der Konfiguration keine Besserung zu erwarten ist. Des Weiteren können die Aufzeichnungen von Problemfällen an die Entwicklungsabteilungen des Geräteherstellers weitergeleitet werden, um mögliche Verbesserungen, beispielsweise in der Anpasssoftware vornehmen zu können.

Entsprechend dem Beispiel von FIG 3 erfolgt direkt im Hörgerät eine Überprüfung 14 der Einstellung 10 in der aktuellen Hörsituation 11 gegenüber den Daten aus der Datenbank 13. Diese Daten aus der Datenbank stellen hier eine Historie der Einstellungen in den jeweiligen Hörsituationen dar. Es kann also überprüft werden, wie sich die aktuelle Einstellung gegenüber den Einstellungen aus der Vergangenheit geändert hat. Ändert sich der Abstand zu einer unmittelbar vorausgehenden Einstellung immer mehr (vgl. Kurve D2 aus FIG 2), so deutet dies auf eine divergierende Kurve hin und es liegt eine nicht adäquate Hörgeräteversorgung vor.

Die Überprüfung 14 kann aber auch gegenüber Daten der Datenbank 13, die vorab in das Hörgerät eingegeben wurden, durchgeführt werden. Somit wird ein Vergleich gegenüber absoluten Daten durchgeführt und eine Aufzeichnung der aktuellen Daten in der Datenbank 13, wie sie in FIG 3 angedeutet ist, ist hier nicht nötig. Beispielsweise kann die Idealkurve I aus FIG 2 in der Datenbank 13 hinterlegt sein. Bei der Überprüfung beispielsweise der Kurve D1 wird dann festgestellt, dass der Abstand zu der Idealkurve I schwankt und immer größer wird. Auch dies deutet auf eine unpassende Versorgung hin.

Das Ergebnis der Überprüfung 14 wird verwendet, um eine Meldung 15 im Hörgerät zu generieren. Diese Meldung kann dem Hörgeräteträger beispielsweise akustisch zugeleitet werden. Alternativ oder zusätzlich kann die Meldung aber auch beispielsweise optisch auf einer Fernbedienung des Hörgeräts dargestellt werden. Die Meldung könnte beispielsweise lauten: "Bitte Akustiker aufsuchen". Der Hörgeräteträger wird somit automatisch darauf hingewiesen, professionelle Hilfe in Anspruch zu nehmen, wenn die Bedienung bzw. Einstellung des Geräts als nicht sinnvoll erscheint.

## Patentansprüche

1. Verfahren zum automatischen Überprüfen einer Einstellung einer tragbaren Hörvorrichtung (12), durch
- Einstellen (10) der Hörvorrichtung (12) mit mindestens einem Einstellwert,
- Aufnehmen und/oder Ermitteln von Schalldaten (11) eines Schalls aus der Umgebung der Hörvorrichtung (12) gleichzeitig mit dem Einstellen (10) des mindestens einen Einstellwerts in der Hörvorrichtung (12) sowie
- Auswerten (14) des Einstellens gegenüber den zeitlich passenden, aufgenommenen Schalldaten in der Hörvorrichtung (12) anhand mindestens eines vorgegebenen Kriteriums,
**dadurch gekennzeichnet, dass** das Verfahren Teil eines automatischen Lernvorgangs der Hörvorrichtung ist, wobei ein Resultat des Schritts des Auswertens (14) für ein Abbruchkriterium des automatischen Lernens herangezogen wird.

2. Verfahren nach Anspruch 1, wobei der Einstellwert ein Parameter einer Signalverarbeitungseinrichtung (3) der Hörvorrichtung (12) ist.

3. Verfahren nach Anspruch 1 oder 2, wobei die Schalldaten Klassifikationsinformation der Hörvorrichtung (12) über den Schall aus der Umgebung beinhalten und die Klassifikationsinformation für das Auswerten herangezogen wird.

4. Verfahren nach einem der vorhergehenden Ansprüche, wobei der mindestens eine Einstellwert eine Lautstärke oder eine Programmidentifikation betrifft.

5. Verfahren nach einem der vorhergehenden Ansprüche, wobei ein Resultat des Schritts des Auswertens von der Hörvorrichtung optisch oder akustisch dem Nutzer gemeldet (15) wird.

6. Verfahren nach einem der vorhergehenden Ansprüche, wobei bei dem Auswerten (14) ein Vergleich eines aktuellen Einstellwerts und der aktuellen Schalldaten mit früheren oder vorgebbaren Einstellwerten und entsprechenden Schalldaten erfolgt.

7. Hörvorrichtung, die am oder im Ohr tragbar ist, mit
- einer Einstelleinrichtung (10) zum Einstellen der Hörvorrichtung (12) mit mindestens einem Einstellwert, und
- einer Vorrichtung zum automatischen Überprüfen einer Einstellung der Hörvorrichtung nach dem Verfahren des Anspruchs 1,
- eine Aufnahmeeinrichtung (11) zum Aufnehmen und/oder Ermitteln von Schalldaten eines Schalls aus der Umgebung der Hörvorrichtung (12) gleichzeitig mit dem Einstellen, und
- eine Auswerteeinrichtung (14) zum Auswerten des mindestens einen Einstellwerts gegenüber den zeitlich passenden, aufgenommenen/ermittelten Schalldaten anhand mindestens eines vorgebbaren Kriteriums,
**dadurch gekennzeichnet, dass** die Hörvorrichtung eine
Lerneinrichtung zum automatischen Lernen von Einstellwerten umfasst, wobei ein Auswerteergebnis der Auswerteeinrichtung (14) der Lerneinrichtung zum Abbrechen des automatischen Lernens zur Verfügung gestellt ist.

8. Hörvorrichtung nach Anspruch 7,
die eine Nutzerschnittstelle (15) aufweist, um ein Auswerteergebnis von der Auswerteeinrichtung (14) einem Nutzer optisch oder akustisch zu melden.

## Claims

1. Method for automatically checking a setting of a wearable hearing device (12) by
- setting (10) the hearing device (12) with at least one setting value,
- recording and/or determining acoustic data (11) of a sound from the environment of the hearing device (12) simultaneously with the setting (10) of the at least one setting value in the hearing device (12) and also
- evaluating (14) the setting against the chronologically matching, recorded acoustic data in the hearing device (12), using at least one predetermined criterion,
**characterised in that** the method is part of an automatic learning process of the hearing device, wherein a result of the evaluation step (14) is used for an abort criterion of the automatic learning.

2. Method according to claim 1, wherein the setting value is a parameter of a signal processing device (3) of the hearing device (12).

3. Method according to claim 1 or 2, wherein the acoustic data contains classification information of the hearing device (12) relating to the sound from the environment and the classification information is used for the evaluation.

4. Method according to one of the preceding claims, wherein the at least one setting value relates to a volume or a program identification.

5. Method according to one of the preceding claims, wherein the user is notified (15) of a result of the evaluation step by the hearing device optically or acoustically.

6. Method according to one of the preceding claims, wherein during the evaluation (14) a comparison is made of a current setting value and the current acoustic data with previous or predeterminable setting values and corresponding acoustic data.

7. Hearing device, which can be worn on or in the ear, with
- a setting device (10) for setting the hearing device (12) with at least one setting value, and
- a device for automatically checking a setting of the hearing device according to the method of claim 1,
- a recording device (11) for recording and/or determining acoustic data of a sound from the environment of the hearing device (12) simultaneously with the setting, and
- an evaluator (14) for evaluating the at least one setting value against the chronologically matching, recorded/determined acoustic data using at least one predeterminable criterion,
**characterised in that** the hearing device comprises a learning device for the automatic learning of setting values, wherein an evaluation result of the evaluator (14) is made available to the learning device for aborting the automatic learning.

8. Hearing device according to claim 7,
which has a user interface (15) to notify a user optically or acoustically of an evaluation result from the evaluator (14).

## Revendications

1. Procédé de contrôle automatique d'un réglage d'un dispositif ( 12 ) auditif portatif par
- réglage ( 10 ) du dispositif ( 12 ) auditif par au moins une valeur de réglage,
- enregistrement et/ou détermination de données ( 11 ) sonores d'un bruit à partir de l'environnement du dispositif ( 12 ) auditif en même temps que le réglage ( 10 ) de la au moins une valeur de réglage dans le dispositif ( 12 ) auditif, ainsi que
- exploitation ( 14 ), au moyen d'au moins un critère prescrit, du réglage par rapport aux données sonores enregistrées et s'adaptant en fonction du temps, dans le dispositif ( 12 ) auditif,
**caractérisé en ce que** le procédé fait partie d'une opération automatique d'apprentissage du dispositif auditif, un résultat du stade de l'exploitation ( 14 ) étant mis à profit pour un critère d'interruption de l'apprentissage automatique.

2. Procédé suivant la revendication 1, dans lequel la valeur de réglage est un paramètre d'un dispositif ( 3 ) de traitement du signal du dispositif ( 12 ) auditif.

3. Procédé suivant la revendication 1 ou 2, dans lequel les données sonores contiennent de l'information de classification du dispositif ( 12 ) auditif sur le bruit de l'environnement et on tire partie de l'information de classification pour l'exploitation.

4. Procédé suivant l'une des revendications précédentes, dans lequel la au moins une valeur de réglage concerne une intensité sonore ou une identification de programme.

5. Procédé suivant l'une des revendications précédentes, dans lequel un résultat du stade de l'exploitation par le dispositif auditif est annoncé ( 15 ) visuellement ou acoustiquement à l'utilisateur.

6. Procédé suivant l'une des revendications précédentes, dans lequel, lors de l'exploitation ( 14 ), on effectue une comparaison d'une valeur de réglage présente et des données sonores présentes avec des valeurs de réglage antérieures ou pouvant être prescrites et des données sonores correspondantes.

7. Dispositif auditif qui peut être porté sur ou dans l'oreille et comprenant
- un dispositif ( 10 ) de réglage pour régler le dispositif ( 12 ) auditif par au moins une valeur de réglage, et
- un dispositif de contrôle automatique d'un réglage du dispositif auditif par le procédé suivant la revendication 1,
- un dispositif ( 11 ) d'enregistrement pour l'enregistrement et/ou la détermination de données sonores d'un bruit provenant de l'environnement du dispositif ( 12 ) auditif en même temps que le réglage, et
- un dispositif ( 14 ) d'exploitation pour exploiter, au moyen d'au moins un critère pouvant être prescrit, la au moins une valeur de réglage par rapport aux données sonores enregistrées/déterminées d'une manière adaptée dans le temps,
**caractérisé en ce que** le dispositif auditif comprend un dispositif d'apprentissage pour l'apprentissage automatique de valeurs de réglage, un résultat d'exploitation du dispositif ( 14 ) d'exploitation étant mis à disposition du dispositif d'apprentissage pour interrompre l'apprentissage automatique.

8. Dispositif auditif suivant la revendication 7,
qui a une interface ( 15 ) utilisateur pour annoncer visuellement acoustiquement à l'utilisateur un résultat d'exploitation par le dispositif ( 14 ) d'exploitation.
